# EUROPEAN PATENT APPLICATION

(11) **EP 4 769 867 A1**
(43) Date of publication of application: **01.07.2026**
(21) Application number: 24893392.1
(22) Date of filing: 18.11.2024
(51) Int. Cl.: H02J 3/36, H02J 3/46, H02M 1/32

(54) **FLEXIBLE ALTERNATING-CURRENT INTERCONNECTION APPARATUS AND CONTROL METHOD**

(30) Priority: 20.11.2023 CN 202311556308; 26.01.2024 CN 202410114629
(71) Applicant: NR ELECTRIC CO., LTD., Jiangning Nanjing, Jiangsu 211102 (CN); NR Engineering Co., Ltd., Nanjing, Jiangsu 211102 (CN)
(72) Inventor: XIE, Yeyuan, Nanjing, Jiangsu 211102 (CN); WEN, Jifeng, Nanjing, Jiangsu 211102 (CN); WANG, Yu, Nanjing, Jiangsu 211102 (CN); DUAN, Jun, Nanjing, Jiangsu 211102 (CN); LIU, Huancheng, Nanjing, Jiangsu 211102 (CN)
(74) Representative: Becker Kurig & Partner Patentanwälte mbB
(86) International application number: PCT/CN2024/132710
(87) International publication number: WO 2025/108235

(57) **Abstract**

A flexible alternating-current (AC) interconnection apparatus and a control method therefor are disclosed. The flexible AC interconnection apparatus comprises a three-phase series-connected converter valve connecting two AC systems. The series-connected converter valve comprises N rectifier-inverter modules, M current-conducting blocking modules and K reactive modules, wherein each of the rectifier-inverter modules comprises a rectifier full-bridge circuit and an inverter full-bridge circuit which are connected in parallel on a direct-current (DC) side; an AC port of the inverter full-bridge circuit of each of the rectifier-inverter modules is successively cascaded with AC ports of the inverter full-bridge circuits of other rectifier-inverter modules; an AC port of the rectifier full-bridge circuit of each of the rectifier-inverter modules is connected to respectivesecondary-side windings of a multi-winding transformer or a power supply capable of supplying energy; each of the current-conducting blocking modules no less than comprises a diode full-bridge rectifier circuit and a blocking capacitor connected in parallel with a DC terminal of the diode full-bridge rectifier circuit; and each of the current-conducting blocking modules further comprises a current-conducting loop. The flexible AC interconnection apparatus has the following advantages of flexible operation mode, high efficiency, and high reliability.

## Description

### Technical Field

The present application belongs to the technical field of high-voltage direct current (HVDC) power transmission, and in particular, relates to a flexible alternating current (AC) interconnection apparatus and a control method.

### Background

At present, with the increasing demands of users for power consumption, electric energy quality and power supply reliability, it is becoming increasingly difficult for traditional power supply networks to meet users' power consumption demands. In an existing power supply and distribution network, the overloading or fault of one line often leads to widespread power outages. Flexible interconnection apparatuses based on power electronic conversion techniques can connect different zonal power supplies or different busbar power supplies, to enable loop closing operation. Meanwhile, the flexible interconnection apparatuses can further facilitate mutual support between power supply zones and power flow balancing.

A traditional interconnection apparatus employs a back-to-back MMC scheme and provides two-terminal reactive power compensation and fault isolation functions, but has problems such as high cost, low transmission efficiency and large footprint.

A patent (CN115483683A) discloses a series-connected flexible AC loop-closing apparatus and system, offering advantages such as controllable bidirectional power controllability, fault isolation and high efficiency. Since the converter chain of this apparatus is composed of a large number of power modules, when the amplitude difference and phase angle difference between AC power supplies connected to the apparatus on both sides are small, only a small number of modules actually effect an adjustment function. When an undervoltage fault occurs to one side of the AC power supplies connected to the apparatus on both sides, the voltage difference applied across the apparatus suddenly increases and thus is applied to the power modules, resulting in direct current (DC) overvoltage across the power modules. Therefore, to address the fault conditions described above, the number of power modules is increased to share the overvoltage generated on the AC side under the fault conditions, such that the cost of the apparatus is significantly increased.

The inventors of the present application have found that there is currently a lack of a low-cost solution to the overvoltage problem caused by AC faults.

### Summary

The present application is intended to provide a flexible AC interconnection apparatus and a control method, to address the overvoltage problem caused by AC faults at low cost.

According to an aspect of the present application, there is provided a flexible AC interconnection apparatus, including a three-phase series-connected converter valve connecting two AC systems, wherein the series-connected converter valve comprises:

N rectifier-inverter modules, where N ≥ 0, each of the rectifier-inverter modules comprising a rectifier full-bridge circuit and an inverter full-bridge circuit connected in parallel on a direct-current (DC) side, wherein an AC port of the inverter full-bridge circuit of each of the rectifier-inverter modules is successively cascaded with AC ports of the inverter full-bridge circuits of other rectifier-inverter modules, and an AC port of the rectifier full-bridge circuit of each of the rectifier-inverter modules is connected to respective secondary-side windings of a multi-winding transformer or a power supply capable of supplying energy;

K reactive modules, where K ≥ 0, each of the reactive modules comprising a reactive full-bridge circuit and an energy storage capacitor connected in parallel on the DC side, wherein AC terminals of the reactive full-bridge circuits are connected in series with AC terminals of the inverter full-bridge circuits of the rectifier-inverter modules, with N + K ≥ 1; and

M current-conducting blocking modules, where M ≥ 1, each of the current-conducting blocking modules comprising a first diode full-bridge rectifier circuit and a blocking capacitor connected in parallel with a DC terminal of the first diode full-bridge rectifier circuit, and AC terminals of the first diode full-bridge rectifier circuits are connected in series with AC terminals of the inverter full-bridge circuits of the rectifier-inverter modules;
wherein each of the current-conducting blocking modules further comprises a current-conducting loop, connected in parallel with the DC or AC terminal of the corresponding first diode full-bridge rectifier circuit.

According to some embodiments, each of the current-conducting blocking modules further comprisesa mechanical switch, connected in series with the AC terminal of the corresponding first diode full-bridge rectifier circuit.

According to some embodiments, where the current-conducting loops are turned on, the current-conducting blocking modules operate in a conducted state; after the current-conducting loops are turned off and voltages of the blocking capacitors increase, the current-conducting blocking modules operate in a blocked state; and/or after the current-conducting loops are turned off, the voltages of the blocking capacitors increase and the mechanical switches are disconnected, the current-conducting blocking modules operate in a disconnected state.

According to some embodiments, the AC terminals of at least two of the first diode full-bridge rectifier circuits are connected in series, and the current-conducting loop is connected in parallel on a series-connected branch of the AC terminals of the at least two of the first diode full-bridge rectifier circuits.

According to some embodiments, the current-conducting loops of the current-conducting blocking modules each comprises a bidirectional blocking unit, connected in parallel with the AC port of the corresponding first diode full-bridge rectifier circuit, wherein the bidirectional blocking unit comprises one or a combination of reversely series-connected IGBTs, MOSFETs, IGCTs, GTOs, bidirectional thyristors and mechanical switches.

According to some embodiments, the current-conducting loops of the current-conducting blocking modules each comprises at least one power semiconductor device, wherein the power semiconductor device is connected in parallel with both DC terminals of the corresponding first diode full-bridge rectifier circuit; or the power semiconductor device is connected in parallel with both terminals of each diode in an upper bridge arm or a lower bridge arm of the corresponding first diode full-bridge rectifier circuit; the semiconductor device comprises one or a combination of IGBTs, MOSFETs, IGCTs, GTOs and thyristors; an AC terminal of the first diode full-bridge rectifier circuit comprises midpoints of two half-bridges forming a full-bridge structure, a midpoint of any one half-bridge forming a full-bridge structure, and a positive or negative electrode of a DC capacitor; and the upper bridge arm comprises a section between the positive electrode of the DC capacitor and the midpoint of the half-bridge; and the lower bridge arm comprises a section between the negative electrode of the DC capacitor and the midpoint of the half-bridge. According to some embodiments, both ends of the inverter full-bridge circuit of each of the rectifier-inverter modules and/or both ends of the current-conducting loop of each of the current-conducting blocking modules are connected in parallel with an overvoltage protection apparatus, a bypass switch and/or a bidirectional thyristor, wherein the bypass switch is electrically opened and closed and is configured to maintain a power-off closed state.

According to some embodiments, the blocking capacitor of each of the current-conducting blocking modules comprises at least two discrete capacitors connected in series, and both ends of each of the discrete capacitors are connected in parallel with voltage-sharing resistors.

According to some embodiments, each of the current-conducting blocking modules further comprises a drive isolation circuit for receiving an external drive signal and controlling turn-on and turn-off of the power semiconductor device after electrical potential isolation.

According to some embodiments, a primary side of the drive isolation circuit is connected to a DC power supply; and the DC power supply is obtainedby at least one of:
1) connecting a ground-potential low-voltage AC power supply to a conductive wire, shorting a tail terminal of the AC power supply, passing the conductive wire through series-connected current transformers (CTs), and rectifying an output of the series-connected CTs, wherein the series-connected CTs involve connecting output terminals of two or more CTs in series together, after which an output current signal is an algebraic sum of current signals output by individual CTs in series connection; and
2) connecting any secondary-side winding of the multi-winding transformer to a conductive wire, shorting a tail terminal of the secondary-side winding, passing the conductive wire through series-connected CTs, and rectifying an output of the series-connected CTs.

According to some embodiments, each of the current-conducting blocking modules further comprises a rectifier unit and at least one isolated power supply, and the rectifier unit comprises a second diode full-bridge rectifier circuit connected in parallel with the blocking capacitor at a DC terminal, wherein an AC terminal of the second diode full-bridge rectifier circuit is connected to a secondary-side winding of an energy supply transformer; and an input of the isolated power supply is connected to the blocking capacitor, and an output of the isolated power supply is connected to the drive isolation circuit.

According to some embodiments, each of the current-conducting blocking modules further comprises an isolated power supply, wherein an input of the isolated power supply is connected with both ends of the blocking capacitor of the current-conducting blocking module, or with the DC capacitor of the adjacent rectifier-inverter module, or with the module control unit of the adjacent rectifier-inverter module, or with the secondary-side winding of the multi-winding transformer; and an output of the isolated power supply is connected to the drive isolation circuit.

According to some embodiments, a discharge loop is connected in parallel with both ends of the blocking capacitor of each of the current-conducting blocking modules, and then connected in series with the isolation switch.

According to some embodiments, at least one power semiconductor device in each of the current-conducting loops is connected in series with a current-limiting loop.

According to an aspect of the present application, there is provided a modularized flexible AC interconnection apparatus, comprising a phase-split series-connected converter valve, which comprisies rectifier-inverter modules, reactive modules and current-conducting blocking modules, connected in series, wherein the rectifier-inverter modules are arranged in an n * N matrix, where n denotes a number of parallel branches and is no less than 1, and N denotes a number of series connections and is no less than 1; the reactive modules are arranged in a k * K matrix, where k denotes a number of parallel connections and is no less than 0, and K denotes a number of series connections and is no less than 0; and the current-conducting blocking modules are arranged in an m * M matrix, with m denotes a number of parallel connections and is no less than 1, and M denotes a number of series connections and is no less than 1.

According to some embodiments, the rectifier-inverter modules, the reactive modules and the current-conducting blocking modules are configured as a preset number of series-connected units, respectively.

According to some embodiments, the AC ports of the rectifier-inverter modules, reactive modules or/and current-conducting blocking modules are connected in parallel with bypass switches. Here, the bypass switches are configured to adjust the number of connections to adjust a size of a corresponding matrix.

According to an aspect of the present application, there is provided a flexible alternating current AC interconnection system, comprising any flexible AC interconnection apparatus as previously described, a control protection device, and at least one valve control unit comprising a first valve control unit and a second valve control unit, wherein the first valve control unit communicates with the module control units of the rectifier-inverter modules and the reactive modules, respectively; the second valve control unit communicates with the current-conducting blocking modules; and the first valve control unit and the second valve control unit communicate with each other, or are integrated into a single chassis.

According to some embodiments, the flexible AC interconnection system further comprises at least three single-phase reactors, wherein the single-phase reactors are connected in series with the series-connected converter valve of the flexible AC interconnection apparatus, and the single-phase reactors are located on one end or both ends of the series-connected converter valve.

According to an aspect of the present application, there is provided a method for controlling any flexible alternating-current AC interconnection apparatus as previously described. The control method comprises:
when the flexible AC interconnection apparatus operates normally, compensating, by the rectifier-inverter modules, for a vector difference between phase voltages of the two AC systems in response to a difference between the phase voltages of the two AC systems being within a preset threshold range, and conducting the current-conducting loops of the current-conducting blocking modules; and
when the flexible AC interconnection apparatus has an overvoltage fault, locking the rectifier-inverter modules in response to the difference between the phase voltages of the two AC systems exceeding the preset threshold range, and locking the current-conducting loops of the current-conducting blocking modules, thereby blocking the vector difference between the phase voltages of the two AC systems.

According to some embodiments, the method further comprises: when the flexible AC interconnection apparatus operates normally, calculating the difference between the phase voltages of the two AC systems, determining a number of connected rectifier-inverter modules based on a DC voltage and a modulation index of the rectifier-inverter modules, and closing the bypass switches of the remaining rectifier-inverter modules; and when redundancy is lost or the difference between the phase voltages of the two AC systems increases, opening the bypass switches of the bypassed rectifier-inverter modules.

According to an embodiment of the present application, the series-connected converter valve in the flexible AC interconnection apparatus provided by the present application consists of the rectifier-inverter modules and the current-conducting blocking modules, both of which are connected in series, wherein the rectifier-inverter modules are responsible for outputting voltages to compensate for a voltage difference at both ends, and adjusting a current flowing through the apparatus by changing the amplitude and phase of the output voltages; and the current-conducting blocking modules are bypassed normally with extremely low loss by itself, and supply voltages during faults to block currents flowing through the apparatus. The apparatus is flexible in operation mode and high in efficiency.

According to some embodiments, the current-conducting blocking modules have a high-voltage design, and the ratio of the number of the current-conducting blocking modules to the number of the rectifier-inverter modules can be reasonably adjusted to enable voltage stress sharing for the rectifier-inverter modules, thereby effectively protecting the rectifier-inverter modules. Due to simple structure, low cost and small footprint of the current-conducting blocking modules, the overall cost and footprint of the apparatus are reduced as a whole.

According to further embodiments, the current-conducting blocking modules draw energy from the adjacent rectifier-inverter modules, such that the challenge in designing a power supply for energy drawing under high-voltage conditions is achieved, and the design is simple and reliable; and the rectifier-inverter modules are under bypass control based on the feedback on a voltage difference at both ends, such that the loss is further reduced.

It should be understood that the general description above and the detailed description below are merely exemplary, and are not intended to limit the present application.

### Brief Description of the Drawings

To describe the technical solutions in the embodiments of the present application more clearly, the following briefly introduces the accompanying drawings required for describing the embodiments. The above and other objects, characteristics and advantages of the present application will become more obvious by describing the exemplary embodiments in detail with reference to the accompanying drawings.
FIG. 1 shows an apparatus block diagram of a flexible AC interconnection apparatus according to an exemplary embodiment of the present application;
FIG. 2 shows a schematic circuit diagram of a flexible AC interconnection apparatus according to an exemplary embodiment of the present application;
FIG. 3A shows a schematic circuit diagram of a current-conducting loop consisting of an IGBT according to an exemplary embodiment of the present application;
FIG. 3B shows a schematic circuit diagram of a current-conducting loop formed by connecting an IGBT and a reversely parallel-connected thyristor in series according to an exemplary embodiment of the present application;
FIG. 3C shows a schematic circuit diagram of another current-conducting loop consisting of an IGBT according to an exemplary embodiment of the present application;
FIG. 3D shows a schematic circuit diagram of another current-conducting loop consisting of an IGBT according to an exemplary embodiment of the present application;
FIG. 3E shows a schematic circuit diagram of another current-conducting loop connected to a current-limiting loop in series according to an exemplary embodiment of the present application;
FIG. 4A shows a schematic circuit diagram of a discharge loop connected in parallel with a blocking capacitor according to an exemplary embodiment of the present application;
FIG. 4B shows a schematic circuit diagram of a diode connected in series to a blocking capacitor according to an exemplary embodiment of the present application;
FIG. 5 shows a schematic circuit diagram of a drive isolation circuit of an external drive signal according to an exemplary embodiment of the present application;
FIG. 6 shows a schematic diagram of a circuit with a DC power supply derived from any one secondary side of an energy supply transformer according to an exemplary embodiment of the present application;
FIG. 7 shows a schematic diagram of a circuit with a DC power supply derived from a power supply board of an adjacent rectifier-inverter module according to an exemplary embodiment of the present application;
FIG. 8 shows a schematic circuit diagram of another flexible AC interconnection apparatus according to an exemplary embodiment of the present application;
FIG. 9 shows a schematic circuit diagram of a current-conducting loop connected in parallel with a bidirectional blocking unit according to an exemplary embodiment of the present application;
FIG. 10 shows a schematic diagram of a current-conducting blocking module connected in series to a mechanical switch according to an exemplary embodiment of the present application;
FIG. 11 shows a schematic circuit diagram of another flexible AC interconnection apparatus according to an exemplary embodiment of the present application;
FIG. 12 shows a schematic circuit diagram of another flexible AC interconnection apparatus according to an exemplary embodiment of the present application; and
FIG. 13 shows a flowchart of a control method for a flexible AC interconnection apparatus according to an exemplary embodiment of the present application.

### Detailed Description of the Embodiments

Exemplary embodiments will now be described more fully with reference to the accompanying drawings. However, these exemplary embodiments can be implemented in a variety of forms and should not be understood as being limited to the embodiments described herein. On the contrary, these embodiments are provided such that the present application will become comprehensive and complete, and the conception of the exemplary embodiments is fully communicated to those skilled in the art. Identical reference signs in the drawings represent identical or similar parts, and their repeated description will be omitted accordingly.

The described features, structures, or properties can be combined in one or more embodiments in any appropriate manner. In the description below, many specific details are provided to thus provide full understanding of the embodiments of the present disclosure. However, those skilled in the art will appreciate that the technical solutions of the present application can be practiced without one or more of these specific details, or other methods, constituent elements, materials, apparatuses, operations or the like can be used. In these cases, the well-known structures, methods, apparatuses, implementations, materials or operations will not be shown or described in detail.

The flowchart shown in the accompanying drawings is only for an illustrative purpose, and does not have to include all the content and operations/steps, nor does it have to be executed in the described order. For example, some operations/steps may be broken down, while other operations/steps may be combined or partially combined. Therefore, the order of the actual execution may vary depending on the actual condition.

The terms "first", "second" and the like in the description and claims as well as in the accompanying drawings of the present invention are used to distinguish different objects, and are not intended to describe a specific order. Furthermore, the terms "include" and "have" and any variations thereof are intended to cover non-exclusive inclusions. For example, a process, method, system, product or device including a series of steps or units is not limited to the listed steps or units, but optionally further includes unlisted steps or units, or optionally further includes other steps or units inherent to the process, method, product or device.

The specific embodiments of the present application are illustrated in detail below in combination with the accompanying drawings.

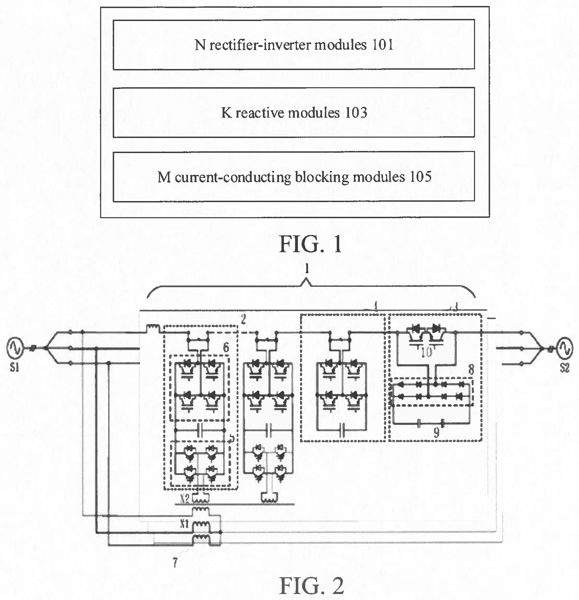

FIG. 1 shows an apparatus block diagram of a flexible AC interconnection apparatus according to an exemplary embodiment of the present application. As shown in FIG. 1, the flexible AC interconnection apparatus comprisesN rectifier-inverter modules 101, K reactive modules 103 and M current-conducting blocking modules 105, with N ≥ 0, M ≥ 1, K ≥ 0, and N + K ≥ 1.

According to an embodiment of the present application, each of the rectifier-inverter modules comprises a rectifier full-bridge circuit and an inverter full-bridge circuit which are connected in parallel on a direct current DC side. Here, an AC port of the inverter full-bridge circuit of each of the rectifier-inverter modules is successively cascaded with AC ports of the inverter full-bridge circuits of other rectifier-inverter modules, and an AC port of the rectifier full-bridge circuit of each of the rectifier-inverter modules is connected to different secondary-side windings of a multi-winding transformer or a power supply capable of supplying energy.

According to some embodiments, each of the reactive modules comprises a reactive full-bridge circuit and an energy storage capacitor connected in parallel on the DC side. Here, AC terminals of the reactive full-bridge circuits are connected in series with AC terminals of the inverter full-bridge circuits of the rectifier-inverter modules.

According to further embodiments, each of the current-conducting blocking modules comprises a first diode full-bridge rectifier circuit and a blocking capacitor connected in parallel with a DC terminal of the first diode full-bridge rectifier circuit, and AC terminals of the first diode full-bridge rectifier circuits are connected in series with AC terminals of the inverter full-bridge circuits of the rectifier-inverter modules.

According to an embodiment of the present application, each of the current-conducting blocking modules further comprises a mechanical switch, which is connected in series with the AC terminal of the corresponding first diode full-bridge rectifier circuit. When the current-conducting loops are turned on, the current-conducting blocking modules operate in a conducted state; after the current-conducting loops are turned off and voltages of the blocking capacitors increase, the current-conducting blocking modules operate in a blocked state; and/or after the current-conducting loops are turned off, the voltages of the blocking capacitors rise and the mechanical switches are disconnected, the current-conducting blocking modules operate in a disconnected state.

In some embodiments, the rectifier-inverter modules and the reactive modules each comprisea module control unit, and are each controlled by the module control unit thereof, or by a superior control unit. For example, the rectifier-inverter modules and the reactive modules are controlled by the superior valve control unit of the flexible AC interconnection apparatus.

In some specific embodiments, each of the current-conducting blocking modules comprises a first diode full-bridge rectifier circuit and a blocking capacitor connected in parallel with a DC terminal of the first diode full-bridge rectifier circuit, and AC terminals of the first diode full-bridge rectifier circuits are connected in series with AC terminals of the inverter full-bridge circuits of the rectifier-inverter modules.

In further embodiments, the current-conducting loops of the current-conducting blocking modules each comprise at least one power semiconductor device, wherein the power semiconductor device is connected in parallel with both DC terminals of the corresponding first diode full-bridge rectifier circuit; or the power semiconductor device is connected in parallel with both terminals of each diode in an upper bridge arm or a lower bridge arm of the corresponding first diode full-bridge rectifier circuit; and the semiconductor device comprises one or a combination of IGBTs, MOSFETs, IGCTs, GTOs and thyristors. An AC terminal of the first diode full-bridge rectifier circuit comprises midpoints of two half-bridges forming a full-bridge structure, a midpoint of any one half-bridges forming a full-bridge structure, and a positive or negative electrode of a DC capacitor; and the upper bridge arm comprises a section between the positive electrode of the DC capacitor and the midpoint of the half-bridge; and the lower bridge arm comprises a section between the negative electrode of the DC capacitor and the midpoint of the half-bridge.

According to an embodiment shown in FIG. 1, the rectifier-inverter modules are responsible for outputting voltages to compensate for a voltage difference at both ends, and adjusting a current flowing through the flexible AC interconnection apparatus by changing the amplitude and phase of the output voltages. The current-conducting blocking modules are bypassed normally with extremely low loss by itself, and when the flexible AC interconnection apparatus has an overvoltage fault, the current-conducting blocking modules supply voltages to block currents flowing through the current-conducting blocking modules, enabling voltage stress sharing for the rectifier-inverter modules to effectively protect the rectifier-inverter modules. Due to simple structure, low cost and small footprint of the current-conducting blocking modules, the overall cost and footprint of the flexible AC interconnection apparatus are reduced.

FIG. 2 shows a schematic circuit diagram of a flexible AC interconnection apparatus according to an exemplary embodiment of the present application. As shown in FIG. 2, the flexible AC interconnection apparatus comprises a three-phase series-connected converter valve connecting two AC systems S1 and S2. As shown in FIG. 2, the three-phase series-connected converter valve 1 comprises N rectifier-inverter modules 2, M current-conducting blocking modules 3 and K reactive modules 4, with N ≥ 1, M ≥ 1 and K ≥ 0.

Each of the rectifier-inverter modules 2 comprises a rectifier full-bridge circuit 5 and an inverter full-bridge circuit 6 which are connected in parallel on a DC side. Here, an AC port of each inverter full-bridge circuit 6 is successively cascaded with AC ports of the inverter full-bridge circuits of other rectifier-inverter modules. The AC port of the rectifier full-bridge circuit 5 is connected to a different secondary-side winding X2 of a multi-winding transformer 7. A primary-side winding X1 of the multi-winding transformer is connected to any AC system.

Each of the reactive modules 4 comprises a reactive full-bridge circuit and an energy storage capacitor connected in parallel on the DC side. Here, the AC terminals of the reactive full-bridge circuits are connected in series with the AC terminals of the inverter full-bridge circuits 6 of the rectifier-inverter modules 2.

The rectifier-inverter modules and the reactive modules each comprise a module control unit.

In some embodiments, both ends of the blocking capacitor 9 of each current-conducting blocking module 3 are further connected in parallel with at least two sampling resistors; and the voltage on the blocking capacitor is divided by the sampling resistors, isolated and then transmitted to the module control unit of the corresponding rectifier-inverter module 2.

Each of the current-conducting blocking modules 3 comprises a first diode full-bridge rectifier circuit 8 and a blocking capacitor 9 connected in parallel with a DC terminal of the first diode full-bridge rectifier circuit, and the AC terminals of the first diode full-bridge rectifier circuits 8 are connected in series with the AC terminals of the inverter full-bridge circuits 6 of the rectifier-inverter modules 2.

According to some embodiments, the blocking capacitor of each of the current-conducting blocking modules comprises at least two discrete capacitors connected in series, both ends of each of the discrete capacitors being connected in parallel with voltage-sharing resistors.

As shown in FIG. 2, each of the current-conducting blocking modules 3 further comprising a current-conducting loop 10, which is connected in parallel with the DC or AC terminal of the corresponding diode full-bridge rectifier circuit.

In some embodiments, the inverter full-bridge circuit 6 of each rectifier-inverter module 2 and/or the AC port of the first diode full-bridge rectifier circuit 8 of each current-conducting blocking module 3 are connected in parallel with a bypass switch and/or a bidirectional thyristor. The bypass switch is electrically opened and closed and has a function of maintaining power-off closing.

In a specific embodiment, each of the current-conducting loops 10 of the current-conducting blocking modules 3 comprises at least one power semiconductor device. Here, the semiconductor device comprises one or a combination of several of an IGBT, an MOSFET, an IGCT, a GTO and a thyristor.

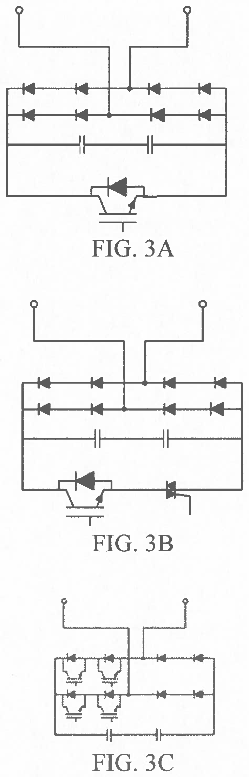

In some embodiments, the power semiconductor device is connected in parallel with both DC terminals of the corresponding first diode full-bridge rectifier circuit 8. The power semiconductor device is connected in parallel with both DC terminals of the corresponding first diode full-bridge rectifier circuit 8, as shown in FIGS. 3A and 3B.

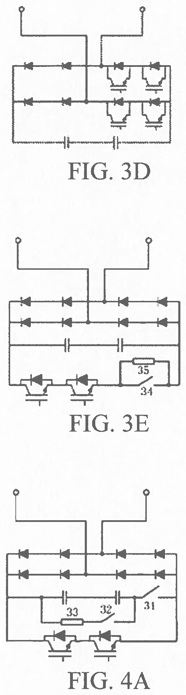

In further embodiments, each power semiconductor device in the current-conducting loops is connected in parallel with both terminals of each diode in an upper bridge arm or a lower bridge arm of the corresponding diode full-bridge rectifier circuit, as shown in FIGS. 3C and 3D. An AC terminal of the diode full-bridge rectifier circuit comprises midpoints of two half-bridges forming a full-bridge structure, a midpoint of any one half-bridges forming a full-bridge structure, and a positive or negative electrode of a DC capacitor; and the upper bridge arm comprises a section between the positive electrode of the DC capacitor and the midpoint of the half-bridge; and the lower bridge arm comprises a section between the negative electrode of the DC capacitor and the midpoint of the half-bridge.

In a specific embodiment, at least one power semiconductor device in each of the current-conducting loops is further connected in series with a current-limiting loop, which comprises a current-limiting resistor 35 and a current-limiting bypass switch 34 in parallel connection, as shown in FIG. 3E.

In a specific embodiment, both ends of the blocking capacitor 9 of each current-conducting blocking module 3 are further connected in parallel with a discharge loop, as shown in FIG. 4A. The discharge loop comprises a discharge resistor 33 and a discharge switch 32 which are connected in series, and both ends of each blocking capacitor are connected in parallel with the discharge loop and then connected in series with the isolation switch 31, as shown in FIG. 3C.

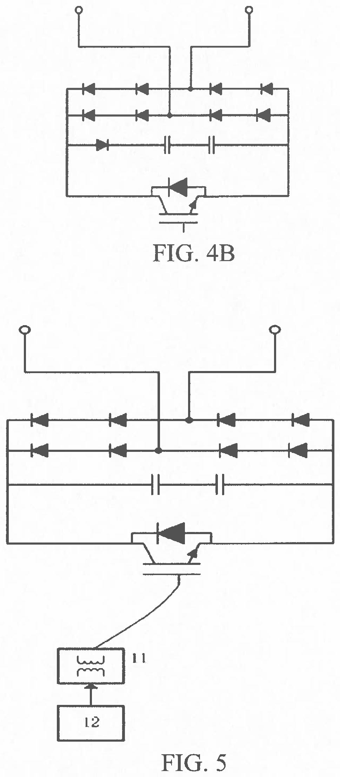

In further embodiments, the blocking capacitor 9 of each current-conducting blocking module 3 is further connected in series with a diode or/and a resistor-inductor element. Here, the negative electrode of the diode is connected to the positive electrode of the blocking capacitor, as shown in FIG. 4B.

In some embodiments, each current-conducting loop 10 of the current-conducting blocking module 3 comprises at least one bidirectional blocking power semiconductor unit. In a specific embodiment, each current-conducting loop 10 is connected in parallel with the AC port of the corresponding first diode full-bridge rectifier circuit 8; and each bidirectional blocking power semiconductor unit comprises reversely series-connected one or a combination of IGBTs, MOSFETs, IGCTs, GTOs and bidirectional thyristors. As shown in FIG. 2, the current-conducting loop 10 is connected in parallel with the AC port of the first diode full-bridge rectifier circuit 8, and the bidirectional blocking power semiconductor unit comprises IGBTs that are reversely connected in series.

In a specific embodiment, the IGBT in each current-conducting blocking module 3 further comprises diodes that are reversely connected in parallel.

In some embodiments, the number of diodes in the first diode full-bridge rectifier circuit is greater than or equal to 1, and when the number of diodes in the first diode full-bridge rectifier circuit is greater than 1, these diodes are connected in series and/or in parallel with a rectifier circuit.

According to an embodiment of the present application, the flexible AC interconnection apparatus shown in FIG. 2 further comprises at least one valve control unit, and the rectifier-inverter modules and the reactive modules each comprise a module control unit. The valve control unit communicates with the module control units of the rectifier-inverter modules and of the reactive modules.

In some embodiments, as shown in FIG. 5, each current-conducting blocking module 3 further comprises a drive isolation circuit 11 for receiving an external drive signal and controlling on and off of the power semiconductor device in each current-conducting blocking module 3 after electrical potential isolation. Here, the external drive signal is from the valve control unit of the flexible AC interconnection apparatus or from the module control unit 12 of each rectifier-inverter module.

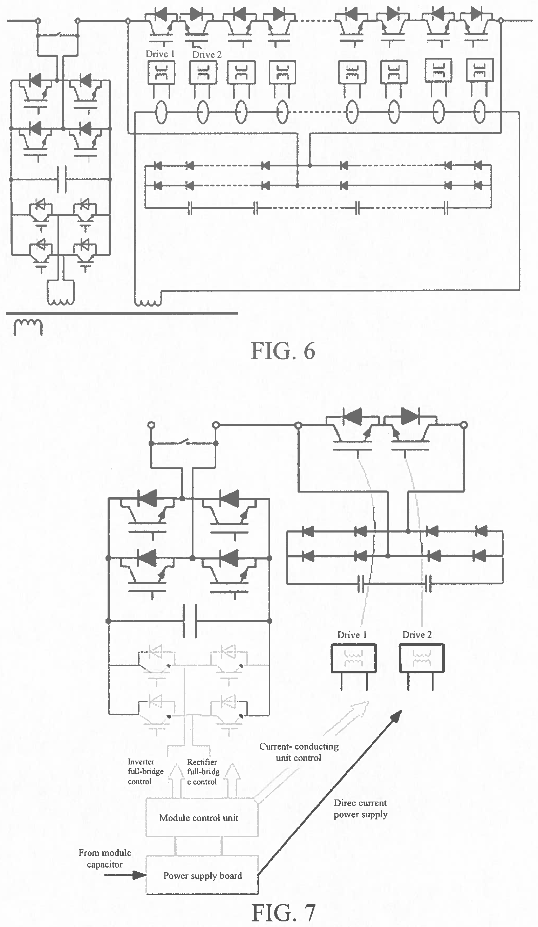

In a specific embodiment, a primary side of the drive isolation circuit is connected to a DC power supply; and the DC power supply is achieved by at least one of:
1) connecting a ground-potential low-voltage AC power supply to a conductive wire, shorting a terminal of the AC power supply, passing the conductive wire through series-connected current transformers (CTs), and rectifying an output of the series-connected CTs, where the series-connected CTs involve connecting output terminals of two or more CTs in series together, after which an output current signal is an algebraic sum of current signals output by individual CTs in series connection;
2) connecting any secondary-side winding of the multi-winding transformer to a conductive wire, shorting a tail terminal of the secondary-side winding, passing the conductive wire through series-connected CTs, and rectifying an output of the series-connected CTs, as shown in FIG. 6; and
3) outputting from the power supply board of the adjacent rectifier-inverter module, as shown in FIG. 7.

According to an embodiment shown in FIG. 2, the rectifier-inverter modules are responsible for outputting voltages to compensate for a voltage difference at both ends, and adjusting a current flowing through the apparatus by changing the amplitude and phase of the output voltages; and the current-conducting blocking modules are bypassed normally with extremely low loss by itself, and supply voltages during faults to block currents flowing through the apparatus. The apparatus is flexible and efficient in operation mode.

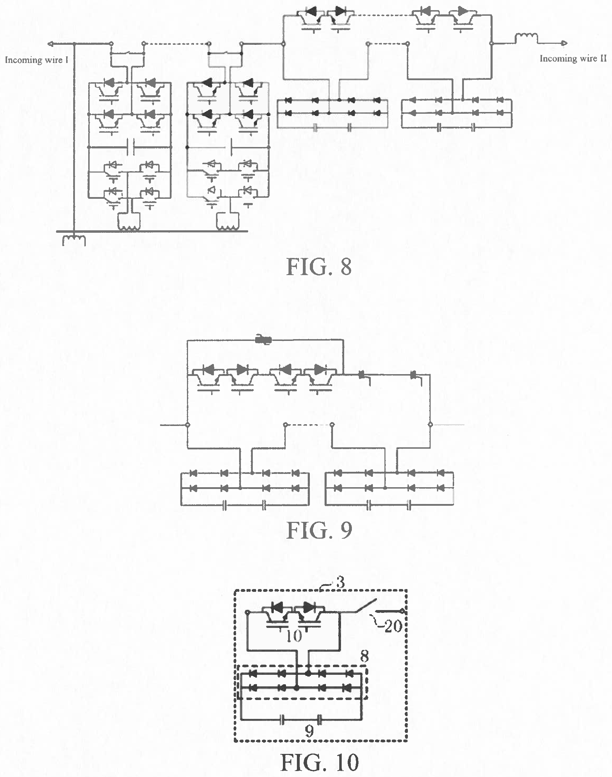

In further embodiments, the AC terminals of at least two of the first diode full-bridge rectifier circuits are connected in series, and the current-conducting loop is connected in parallel on a series-connected branch of the AC terminals of the at least two of the first diode full-bridge rectifier circuits. As shown in FIG. 8, the AC terminals of the two first diode full-bridge rectifier circuits are connected in series, and the current-conducting loop is connected in parallel on a series-connected branch of the AC terminals of the two first diode full-bridge rectifier circuits.

According to further embodiments, the current-conducting loops of the current-conducting blocking modules each comprise at least one bidirectional blocking unit, which is connected in parallel with the AC port of the corresponding first diode full-bridge rectifier circuit, wherein the bidirectional blocking unit comprises reversely series-connected one or a combination of IGBTs, MOSFETs, IGCTs, GTOes, bidirectional thyristors and mechanical switched, as shown in FIG. 9.

According to further embodiments, each of the current-conducting blocking modules further comprises a mechanical switch 20, which is connected in series with the AC terminal of the corresponding diode full-bridge rectifier circuit. As shown in FIG. 10, the bidirectional blocking power semiconductor unit in the current-conducting loop 10 comprisesa controllable semiconductor device, and the blocking capacitor 9 comprises a DC capacitor. The current-conducting blocking modules operate in three states, namely a conducted state, a blocked state and a disconnected state. Here, the conducted state is achieved by controlling the controllable semiconductor device to be conducted; the blocked state is achieved by controlling the controllable semiconductor device to be turned off and raising the voltage of the DC capacitor; and the disconnected state is achieved by controlling the controllable semiconductor device to be turned off, raising the voltage of the DC capacitor and disconnecting the mechanical switch.

According to some embodiments of the present application, each of the current-conducting blocking modules further comprises a drive isolation circuit for receiving an external drive signal and controlling turn-on and turn-off of the power semiconductor device after electrical potential isolation.

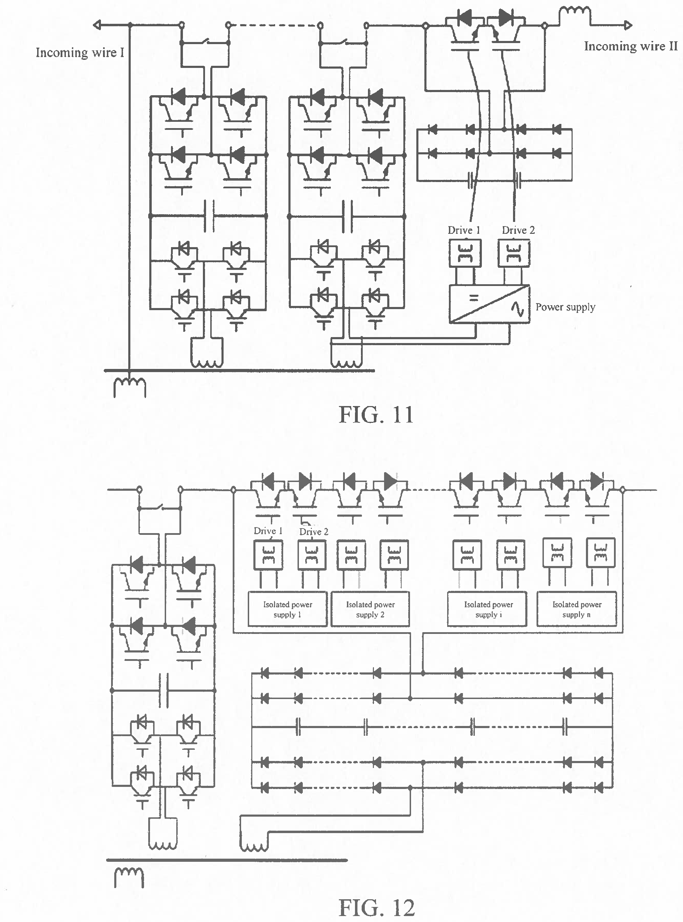

In a specific embodiment, an input of the isolated power supply is connected to both ends of the blocking capacitor of the current-conducting blocking module, or to the DC capacitor of the adjacent rectifier-inverter module, or to the module control unit of the adjacent rectifier-inverter module, or to the secondary-side winding of the multi-winding transformer; and an output of the isolated power supply is connected to the drive isolation circuit. Here, the current-conducting blocking modules and the rectifier-inverter modules are disposed in the same series-connected converter valve. As shown in FIG. 11, in this embodiment, the current-conducting blocking modules draw energy from the adjacent rectifier-inverter modules, such that the challenge in designing a power supply for energy drawing under high voltage conditions is achieved, and the design is simple and reliable; and the rectifier-inverter modules are under bypass control based on the feedback on a voltage difference at both ends, such that the loss is further reduced.

In further embodiments, each of the current-conducting blocking modules further comprises a rectifier unit, or each of the current-conducting blocking modules further comprises a rectifier unit and at least one isolated power supply, and the rectifier unit comprises a second diode full-bridge rectifier circuit connected in parallel with the blocking capacitor at a DC terminal. Here, an AC terminal of the second diode full-bridge rectifier circuit is connected to a secondary-side winding of an energy supply transformer; and an input of the isolated power supply is connected to the blocking capacitor, and an output of the isolated power supply is connected to the drive isolation circuit, as shown in FIG. 12.

According to an embodiment of the present application, there is further provided a modularized flexible AC interconnection apparatus, which comprises a phase-split series-connected converter valve. The phase-split series-connected converter valve comprises rectifier-inverter modules, reactive modules and current-conducting blocking modules, all of which are connected in series. Here, the rectifier-inverter modules are arranged in an n * N matrix, with n denoting a number of parallel connections and being greater than or equal to 1, and N denotinga number of series connections and being greater than or equal to 1; the reactive modules are arranged in a k * K matrix, with k denoting a number of parallel connections and being greater than or equal to 0, and K denoting a number of series connections and being greater than or equal to 0; and the current-conducting blocking modules are arranged in an m * M matrix, with m denoting a number of parallel connections and being greater than or equal to 1, and M denoting a number of series connections and being greater than or equal to 1.

According to some embodiments, the rectifier-inverter modules, the reactive modules and the current-conducting blocking modules are designed as a preset number of series-connected units, respectively. In a specific embodiment, the modularized flexible AC interconnection apparatus comprises a preset number of series-connected units, which comprise rectifier-inverter modules, reactive modules and current-conducting blocking modules.

According to some embodiments, the AC ports of the rectifier-inverter modules, reactive modules or/and current-conducting blocking modules are connected in parallel with bypass switches. Here, the bypass switches serve to adjust the number of connections to adjust a size of a corresponding matrix. That is, when the bypass switches are closed, the rectifier-inverter modules, the reactive modules or the current-conducting blocking modules, which are connected in parallel with the bypass switches, are bypassed.

According to some embodiments of the present application, there is provided a flexible AC interconnection system. Here, the flexible alternating-current AC interconnection system comprises any flexible AC interconnection apparatus as previously described, a control protection device, and at least one valve control unit.

According to some embodiments, the at least one valve control unit comprises a first valve control unit and a second valve control unit. Here, the first valve control unit communicates with the module control units of the rectifier-inverter modules and the reactive modules, respectively; the second valve control unit communicates with the current-conducting blocking modules; and the first valve control unit and the second valve control unit communicate with each other, or are integrated in the same chassis.

According to some embodiments, the flexible AC interconnection system further comprises at least three single-phase reactors. Here, the single-phase reactors are connected in series with the series-connected converter valve of the flexible AC interconnection apparatus, and the single-phase reactors are located on one end or both ends of the series-connected converter valve. That is, a single-phase reactor is connected in series with one end of the flexible AC interconnection apparatus, or two both ends of the flexible AC interconnection apparatus.

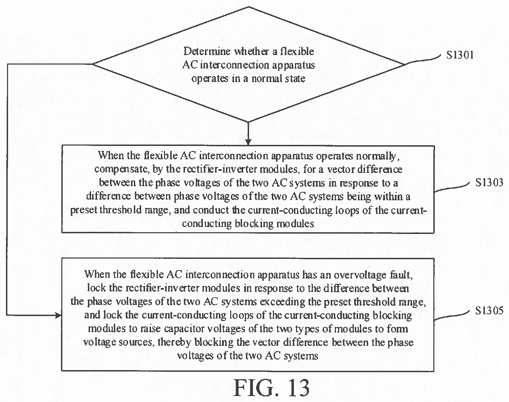

FIG. 13 shows a flowchart of a control method for a flexible AC interconnection apparatus according to an exemplary embodiment of the present application. As shown in FIG. 13, the method comprisesthe following steps.

In step S1201, the operation state of the flexible AC interconnection apparatus is first determined, i.e., determining whether the flexible AC interconnection apparatus operates in a normal state. When the flexible AC interconnection apparatus operates normally, S1203 is performed; and when the flexible AC interconnection apparatus has an overvoltage fault, S1205 is performed.

In step S1203, when the flexible AC interconnection apparatus operates normally, a vector difference between the phase voltages of the two AC systems is compensated by the rectifier-inverter modules in response to a difference between phase voltages of the two AC systems being within a preset threshold range and the current-conducting loops of the current-conducting blocking modules are conducted.

In step S1205, when the flexible AC interconnection apparatus has an overvoltage fault, the rectifier-inverter modules are locked in response to the difference between the phase voltages of the two AC systems exceeding the preset threshold range, and the current-conducting loops of the current-conducting blocking modules are locked to raise capacitor voltages of the two types of modules to form voltage sources, thereby blocking the vector difference between the phase voltages of the two AC systems.

According to an embodiment of the present application, in order to further increase the efficiency, the method shown in FIG. 13 further comprises : when the flexible AC interconnection apparatus operates normally, determining a number of connected rectifier-inverter modules based on the calculated difference between the phase voltages of the two AC systems and according to a DC voltage and a modulation index of the rectifier-inverter modules, and closing the bypass switches of the remaining rectifier-inverter modules or turning on the bidirectional thyristors; and when redundancy is lost or the difference between the phase voltages of the two AC systems increases, opening the bypass switches of the bypassed rectifier-inverter modules or turning off the bidirectional thyristors. According to some embodiments, the current-conducting blocking modules have a high-voltage design. In this embodiment, the ratio of the number of the current-conducting blocking modules to the number of the rectifier-inverter modules can be reasonably adjusted to enable voltage stress sharing for the rectifier-inverter modules, thereby effectively protecting the rectifier-inverter modules. Due to simple structure, low cost and small footprint of the current-conducting blocking modules, the overall cost and footprint of the apparatus are reduced as a whole.

The embodiments of the present application are described in detail above. The specific examples are used herein to set forth the principle and embodiments of the present application. The description of the embodiments above are merely for the purpose of helping understand the methods of the present application and their core concepts. Meanwhile, the alternations or variations made by those skilled in the art in accordance with the concept of the present application and based on the specific embodiments and application scope of the present application shall fall within the protection scope of the present application. In summary, the content of the Specification should not be understood as limiting the present application.

## Claims

1. A flexible alternating current (AC) interconnection apparatus comprising a three-phase series-connected converter valve connecting two AC systems, wherein the series-connected converter valve comprises:
N rectifier-inverter modules, where N ≥ 0, each of the rectifier-inverter modules comprising a rectifier full-bridge circuit and an inverter full-bridge circuit connected in parallel on a direct-current (DC) side, wherein an AC port of the inverter full-bridge circuit of each of the rectifier-inverter modules is successively cascaded with AC ports of the inverter full-bridge circuits of other rectifier-inverter modules, and an AC port of the rectifier full-bridge circuit of each of the rectifier-inverter modules is connected to respective secondary-side windings of a multi-winding transformer or a power supply capable of supplying energy;
K reactive modules, where K ≥ 0, each of the reactive modules comprising a reactive full-bridge circuit and an energy storage capacitor connected in parallel on the DC side, wherein AC terminals of the reactive full-bridge circuits are connected in series with AC terminals of the inverter full-bridge circuits of the rectifier-inverter modules, with N + K ≥ 1; and
M current-conducting blocking modules, where M ≥ 1, each of the current-conducting blocking modules comprising a first diode full-bridge rectifier circuit and a blocking capacitor connected in parallel with a DC terminal of the first diode full-bridge rectifier circuit, and AC terminals of the first diode full-bridge rectifier circuits are connected in series with AC terminals of the inverter full-bridge circuits of the rectifier-inverter modules;
wherein each of the current-conducting blocking modules further comprises a current-conducting loop connected in parallel with the DC or AC terminal of the corresponding first diode full-bridge rectifier circuit.

2. The flexible AC interconnection apparatus according to claim 1, wherein each of the current-conducting blocking modules further comprises a mechanical switch connected in series with the AC terminal of the corresponding first diode full-bridge rectifier circuit.

3. The flexible AC interconnection apparatus according to claim 2, wherein
where the current-conducting loops are turned on, the current-conducting blocking modules operate in a conducted state;
after the current-conducting loops are turned off and voltages of the blocking capacitors rise, the current-conducting blocking modules operate in a blocked state; and/or
after the current-conducting loops are turned off, the voltages of the blocking capacitors rise and the mechanical switches are disconnected, the current-conducting blocking modules operate in a disconnected state.

4. The flexible AC interconnection apparatus according to claim 1, wherein the rectifier-inverter modules and the reactive modules each comprise a module control unit; and
the rectifier-inverter modules and the reactive modules are each controlled by its respective module control unit or by a superior control unit.

5. The flexible AC interconnection apparatus according to claim 1, wherein the AC terminals of at least two of the first diode full-bridge rectifier circuits are connected in series, and the current-conducting loop is connected in parallel on a series-connected branch of the AC terminals of the at least two of the first diode full-bridge rectifier circuits.

6. The flexible AC interconnection apparatus according to claim 1, wherein the current-conducting loops of the current-conducting blocking modules each comprises a bidirectional blocking unit connected in parallel with the AC port of the corresponding first diode full-bridge rectifier circuit, and wherein
the bidirectional blocking unit comprises one or a combination of reversely series-connected IGBTs, MOSFETs, IGCTs, GTOs, bidirectional thyristors and mechanical switches.

7. The flexible AC interconnection apparatus according to claim 1, wherein the current-conducting loops of the current-conducting blocking modules each comprises at least one power semiconductor device, wherein
the power semiconductor device is connected in parallel with both DC terminals of the corresponding first diode full-bridge rectifier circuit; or
the power semiconductor device is connected in parallel with both terminals of each diode in an upper bridge arm or a lower bridge arm of the corresponding first diode full-bridge rectifier circuit;
the semiconductor device comprises one or a combination of IGBTs, MOSFETs, IGCTs, GTOs and thyristors;
an AC terminal of the first diode full-bridge rectifier circuit comprises midpoints of two half-bridges forming a full-bridge structure, a midpoint of any one half-bridge forming a full-bridge structure, and a positive or negative electrode of a DC capacitor; and the upper bridge arm comprises a section between the positive electrode of the DC capacitor and the midpoint of the half-bridge; and the lower bridge arm comprises a section between the negative electrode of the DC capacitor and the midpoint of the half-bridge.

8. The flexible AC interconnection apparatus according to claim 1, wherein both ends of the inverter full-bridge circuit of each of the rectifier-inverter modules and/or both ends of the current-conducting loop of each of the current-conducting blocking modules are connected in parallel with an overvoltage protection apparatus, a bypass switch and/or a bidirectional thyristor, wherein the bypass switch is electrically opened and closed and is configured to maintain power-off closed state.

9. The flexible AC interconnection apparatus according to claim 5, wherein the blocking capacitor of each of the current-conducting blocking modules comprises at least two discrete capacitors connected in series, and both ends of each of the discrete capacitors are connected in parallel with voltage-sharing resistors.

10. The flexible AC interconnection apparatus according to claim 7, wherein each of the current-conducting blocking modules further comprises a drive isolation circuit configured to receive an external drive signal and control turn-on and turn-off of the power semiconductor device following electrical potential isolation.

11. The flexible AC interconnection apparatus according to claim 10, wherein a primary side of the drive isolation circuit is connected to a DC power supply; and the DC power supply is achieved by at least one of:
1) connecting a ground-potential low-voltage AC power supply to a conductive wire, shorting a terminal of the AC power supply, passing the conductive wire through series-connected current transformers (CTs), and rectifying an output of the series-connected CTs; and
2) connecting any secondary-side winding of the multi-winding transformer to a conductive wire, shorting a terminal of the secondary-side winding, passing the conductive wire through series-connected CTs, and rectifying an output of the series-connected CTs.

12. The flexible AC interconnection apparatus according to claim 10, wherein each of the current-conducting blocking modules further comprises a rectifier unit and at least one isolated power supply, and the rectifier unit comprises a second diode full-bridge rectifier circuit connected in parallel with the blocking capacitor at a DC terminal, wherein
an AC terminal of the second diode full-bridge rectifier circuit is connected to a secondary-side winding of an energy supply transformer; and
an input of the isolated power supply is connected to the blocking capacitor, and an output of the isolated power supply is connected to the drive isolation circuit.

13. The flexible AC interconnection apparatus according to claim 10, wherein each of the current-conducting blocking modules further comprises an isolated power supply, wherein
an input of the isolated power supply is connected with both ends of the blocking capacitor of the current-conducting blocking module, with the DC capacitor of the adjacent rectifier-inverter module, with the module control unit of the adjacent rectifier-inverter module, or with the secondary-side winding of the multi-winding transformer; and
an output of the isolated power supply is connected to the drive isolation circuit.

14. The flexible AC interconnection apparatus according to claim 1, wherein a discharge loop is connected in parallel with both ends of the blocking capacitor of each of the current-conducting blocking modules, and then connected in series with the isolation switch.

15. The flexible AC interconnection apparatus according to claim 7, wherein at least one power semiconductor device in each of the current-conducting loops is connected in series with a current-limiting loop.

16. A modularized flexible alternating current (AC) interconnection apparatus comprising a phase-split series-connected converter valve comprising rectifier-inverter modules, reactive modules and current-conducting blocking modules, connected in series, wherein
the rectifier-inverter modules are arranged in an n * N matrix, where n denotes a number of parallel branches and is no less than 1, and N denotes a number of series connections and is no less than 1;
the reactive modules are arranged in a k * K matrix, where k denotes a number of parallel connections and is no less than 0, and K denotes a number of series connections and is no less than 0; and
the current-conducting blocking modules are arranged in an m * M matrix, where m denotes a number of parallel connections and is no less than 1, and M denotes a number of series connections and is no less than 1.

17. The modularized flexible AC interconnection apparatus according to claim 16, wherein the rectifier-inverter modules, the reactive modules and the current-conducting blocking modules are configured as a preset number of series-connected units, respectively.

18. The modularized flexible AC interconnection apparatus according to any one of claims 16 to 17, wherein AC ports of the rectifier-inverter modules, the reactive modules and/or the current-conducting blocking modules are connected in parallel with bypass switches, wherein
the bypass switches are configured to adjust a number of connections to adjust a size of a corresponding matrix.

19. A flexible alternating-current (AC) interconnection system, comprising the flexible AC interconnection apparatus according to any one of claims 1 to 11, a control protection device, and at least one valve control unit comprising a first valve control unit and a second valve control unit, wherein
the first valve control unit communicates with the module control units of the rectifier-inverter modules and the reactive modules, respectively;
the second valve control unit communicates with the current-conducting blocking modules; and
the first valve control unit and the second valve control unit communicate with each other, or are integrated into a single chassis.

20. The flexible AC interconnection system according to claim 19, further comprising at least three single-phase reactors, wherein the single-phase reactors are connected in series with the series-connected converter valve of the flexible AC interconnection apparatus, and the single-phase reactors are located on one end or both ends of the series-connected converter valve.

21. A method for controlling the flexible alternating-current (AC) interconnection apparatus according to any one of claims 1 to 15, comprising:
when the flexible AC interconnection apparatus operates normally, compensating, by the rectifier-inverter modules, for a vector difference between phase voltages of the two AC systems in response to a difference between the phase voltages of the two AC systems being within a preset threshold range, and conducting the current-conducting loops of the current-conducting blocking modules; and
when the flexible AC interconnection apparatus has an overvoltage fault, locking the rectifier-inverter modules in response to the difference between the phase voltages of the two AC systems exceeding the preset threshold range, and locking the current-conducting loops of the current-conducting blocking modules, thereby blocking the vector difference between the phase voltages of the two AC systems.

22. The method according to claim 21, further comprising:
when the flexible AC interconnection apparatus operates normally, calculating the difference between the phase voltages of the two AC systems, determining a number of connected rectifier-inverter modules based on a DC voltage and a modulation index of the rectifier-inverter modules, and closing the bypass switches of the remaining rectifier-inverter modules; and
when redundancy is lost or the difference between the phase voltages of the two AC systems increases, opening the bypass switches of the bypassed rectifier-inverter modules.
